# EUROPÄISCHE PATENTANMELDUNG

(11) **EP 2 527 633 A2**
(43) Veröffentlichungstag der Anmeldung: **28.11.2012**
(21) Anmeldenummer: 12165493.3
(22) Anmeldetag: 25.04.2012
(51) Int. Cl.: F02D 41/40

(54) **Verfahren zum Betreiben einer Brennkraftmaschine**

(30) Priorität: 23.05.2011 DE 102011076287
(71) Anmelder: ROBERT BOSCH GMBH, 70442 Stuttgart (DE)
(72) Erfinder: Becker, Thomas, 73730 Esslingen/Zell (DE); Mennicken, Michael, 71299 Wimsheim (DE); Peck, Rainer, 71636 Ludwigsburg (DE); Bartsch, Andreas, 71229 Leonberg (DE); Ulrich, Lars, 71229 Leonberg (DE)

(57) **Zusammenfassung**

Es wird ein Verfahren zum Betreiben einer Brennkraftmaschine (10) beschrieben, bei dem Kraftstoff mittels eines Injektors (14) in einen Brennraum der Brennkraftmaschine (10) eingespritzt wird, wobei eine Größe, welche eine Steigung (62) einer Geraden (60) oder einer mindestens abschnittsweise geradenartigen Kurve charakterisiert, ermittelt wird, und wobei die Gerade (60) oder geradenartige Kurve Ansteuerdauern (52) des Injektors (14) mit jeweils zugehörigen Differenzwerten (50) verknüpft, und wobei ein Differenzwert (50) durch die Differenz zwischen einem aktuellen Schließzeitpunkt (56) und einem Referenz-Schließzeitpunkt (58) oder zwischen einer aktuellen Einspritzmenge (64) und einer Referenz-Einspritzmenge (66) gebildet wird, und wobei aus der ermittelten Größe ein Maß (54) für eine Verkokung des Injektors (14) ermittelt wird.

## Beschreibung

### Stand der Technik

Die Erfindung betrifft ein Verfahren nach dem Oberbegriff des Anspruchs 1, sowie ein Computerprogramm und eine Steuer- und/oder Regeleinrichtung nach den nebengeordneten Patentansprüchen.

Vom Markt her ist es bekannt, Kraftstoff mittels eines Injektors ("Common-Rail-Injektor") in einen Brennraum einer Brennkraftmaschine einzuspritzen. Dabei unterliegt der Injektor über seiner Lebensdauer verschiedenen Mechanismen, welche - bei jeweils gleicher Ansteuerung einer den Injektor betätigenden elektrischen Betätigungseinrichtung - zu Veränderungen der eingespritzten Kraftstoffmenge führen. Solche Mechanismen sind beispielsweise ein Verschleiß des Injektors, sowie Belagsbildungen und Verkokung an einer Ventilnadel oder einer Ventildüse bzw. Auslassöffnung des Injektors.

Eine Patentveröffentlichung aus diesem Fachgebiet ist beispielsweise die DE 10 2008 001 412 A1.

### Offenbarung der Erfindung

Das der Erfindung zugrunde liegende Problem wird durch ein Verfahren nach Anspruch 1 sowie durch ein Computerprogramm und eine Steuer- und/oder Regeleinrichtung nach den nebengeordneten Ansprüchen gelöst. Vorteilhafte Weiterbildungen sind in Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.

Das erfindungsgemäße Verfahren hat den Vorteil, dass ein Verkokungsgrad eines Injektors (Einspritzventil) einer Brennkraftmaschine individuell ermittelt werden kann. Dadurch kann eine Kraftstoff-Einspritzmenge unabhängig von dem Verkokungsgrad korrekt zugemessen und somit die Verkokung kompensiert werden. Ergänzend kann ein jeweiliger Kraftstoffdruck berücksichtigt werden. Durch die Bestimmung des Verkokungsgrades können auch übrige Korrekturfunktionen der Brennkraftmaschine genauer arbeiten. Beispielsweise können die Abgasemissionen und die Laufruhe über der Lebensdauer des Injektors im Wesentlichen unabhängig von dem Verkokungsgrad eingestellt oder geregelt werden. Einer eventuellen Beschädigung der Brennkraftmaschine kann vorgebeugt werden. Weiterhin ist es möglich, die Verkokung des Injektors unabhängig von sonstigen den Betrieb des Injektors beeinflussenden Größen - wie beispielsweise ein Verschleiß eines Ventilsitzes des Injektors oder eine Belagsbildung an einer Ventilnadel - zu ermitteln. Gegebenenfalls kann unterschieden werden, ob ein nicht regenerierbarer Injektordefekt vorliegt.

Die Verkokung beeinflusst die durch den Injektor eingespritzte Kraftstoffmenge insbesondere bei mittleren oder langen Ansteuerdauern, wodurch eine eingespritzte Ist-Kraftstoffmenge in Bezug auf eine einzuspritzende Soll-Kraftstoffmenge verändert wird. Die Verkokung kann insbesondere eine Ventildüse (Injektordüse) bzw. Auslassöffnung des Injektors betreffen. Der die Verkokung kennzeichnende Verkokungsgrad kann - beispielsweise abhängig von Betriebsbedingungen des Injektors - während der Lebensdauer des Injektors zunehmen oder auch abnehmen, und ist somit zeitlich veränderlich.

Eine Verkokung des Injektors, insbesondere im Bereich der Injektordüse bzw. der Auslassöffnung des Injektors, kann zu einer Veränderung der jeweiligen Druckunterschiede ("Staudruck") und damit zu einer Verringerung der durchströmenden Kraftstoffmenge führen. Beispielsweise kann die Dynamik des Injektors verändert werden, indem die Ventilnadel als Folge der Verkokung während der Öffnungsbewegung stärker beschleunigt wird, wodurch sich ein verspäteter Schließzeitpunkt ergeben kann.

Zum ersten werden erfindungsgemäß Referenz-Schließzeitpunkte des Injektors in Abhängigkeit von Ansteuerdauern des Injektors ermittelt, beispielsweise auf einem Teststand bei einem neuen Injektor, und abgespeichert. Zum zweiten werden in vergleichbarer Weise aktuelle Schließzeitpunkte des Injektors im weiteren Betrieb der Brennkraftmaschine ermittelt. Unter "Ansteuerung" des Injektors wird vorliegend die Ansteuerung einer den Injektor betätigenden elektrischen Betätigungseinrichtung verstanden, welche beispielsweise mit dem Injektor in einem Gehäuse verbaut ist.

Weiterhin werden Differenzen zwischen den jeweiligen aktuellen Schließzeitpunkten und den jeweiligen Referenz-Schließzeitpunkten gebildet, woraus sich entsprechende Differenzwerte ergeben. Die so erhaltenen Differenzwerte werden mit den zugehörigen Ansteuerdauern zu einem funktionalen Zusammenhang in Gestalt einer (mathematischen) Kurve verknüpft. Dabei verläuft die Kurve im Wesentlichen als Gerade oder sie verläuft zumindest abschnittsweise geradenartig. Aus der Kurve wird eine Größe ermittelt, welche eine Steigung der Geraden bzw. eines geradenartigen Abschnitts der Kurve charakterisiert. Zur Ermittlung der Kurve bzw. ihrer Steigung sind also mindestens zwei verschiedene Ansteuerdauern erforderlich. Erfindungsgemäß wird die Größe bzw. die Steigung dazu verwendet, um ein Maß für eine Verkokung des Injektors (Verkokungsgrad) zu ermitteln.

Alternativ zu dem Referenz-Schließzeitpunkt bzw. dem aktuellen Schließzeitpunkt kann erfindungsgemäß auch eine Referenz-Einspritzmenge bzw. eine aktuelle Einspritzmenge des Kraftstoffs verwendet werden. Diese werden in einer vergleichbaren Weise wie oben beschrieben, in Abhängigkeit von der Ansteuerdauer zur Ermittlung des Verkokungsgrades verwendet.

Insbesondere ist vorgesehen, dass, wie bereits oben erwähnt, der Referenz-Schließzeitpunkt oder die Referenz-Einspritzmenge an einem nicht verkokten Referenz-Injektor ermittelt und in einem Speicher abgelegt wurden. Die zugehörigen Ansteuerdauern und der jeweilige Kraftstoffdruck wurden mit abgespeichert. Dadurch kann im laufenden Betrieb der Brennkraftmaschine wiederholt auf die abgespeicherten Werte zugegriffen und diese für die Ermittlung der Verkokung verwendet werden. Dadurch kann das Verfahren vereinfacht werden.

Dabei kann der Referenz-Injektor ein gesondertes Bauteil sein, beispielsweise in einem Messaufbau einer Fertigungseinrichtung. Ebenso kann der Referenz-Injektor auch der jeweilige in die Brennkraftmaschine eingebaute Injektor sein, welcher in einem Neuzustand des Injektors bzw. der Brennkraftmaschine durch dieselben Einrichtungen vermessen wird, mit denen im weiteren Betrieb auch die aktuellen Schließzeitpunkte bzw. aktuellen Kraftstoff-Einspritzmengen ermittelt werden.

Die Genauigkeit des Verfahrens wird erhöht, wenn es bei einem konstanten Kraftstoffdruck durchgeführt wird. Damit kann die Ermittlung der mindestens abschnittsweise geradenartigen Kurven unter Verwendung mehrerer verschieden langer Ansteuerdauern besonders genau erfolgen. Der jeweilige Kraftstoffdruck kann zusammen mit den Referenz-Schließzeitpunkten bzw. Referenz-Einspritzmengen als Parameter abgespeichert werden. Ebenso werden auch die aktuellen Schließzeitpunkte bzw. die aktuellen Einspritzmengen bei konstantem Kraftstoffdruck ermittelt, so dass ein besonders genauer Vergleich zu den jeweiligen Referenzwerten möglich ist. Ergänzend können in entsprechender Weise auch eine Kraftstofftemperatur und/oder eine Kraftstoffsorte berücksichtigt werden.

Weiterhin ist vorgesehen, dass eine Größe, welche einer größeren Steigung entspricht, als Anzeichen für eine stärkere Verkokung gewertet wird als eine Größe, welche einer kleineren Steigung entspricht. Dieser Zusammenhang ist im Allgemeinen monoton. Somit kann das Maß für die Verkokung quantitativ und vergleichsweise genau ermittelt werden. Es versteht sich, dass je nach einem gewählten Vorzeichen der Differenzwerte mit "größerer Steigung" gegebenenfalls auch ein "größerer Betrag der Steigung" gemeint sein kann.

Das erfindungsgemäße Verfahren ist besonders nützlich, wenn die Ansteuerung des Injektors in Abhängigkeit von der ermittelten Verkokung derart geändert wird, dass eine Ist-Einspritzmenge des Kraftstoffs in Bezug auf eine Soll-Einspritzmenge korrigiert wird. Somit sind die Betriebseigenschaften der Brennkraftmaschine, insbesondere die Leistung, die Abgasemissionen und die Laufruhe, über der Lebensdauer des Injektors im Wesentlichen unabhängig von dem jeweiligen Verkokungsgrad.

Eine Ausgestaltung des Verfahrens sieht vor, dass der Schließzeitpunkt ermittelt wird, indem ein Anschlagen eines Ventilelements an einem Ventilsitz des Injektors mittels einer Auswertung eines an einer elektrischen Betätigungseinrichtung des Injektors anliegenden elektrischen Signals ermittelt wird. Vorzugsweise wird das elektrische Signal an denselben Anschlüssen erfasst, welche zur Ansteuerung des Injektors verwendet werden. Im Allgemeinen entsteht das den Schließzeitpunkt charakterisierende elektrische Signal mit einer bestimmten Verzögerung nach dem Abschalten einer Ansteuerspannung. Durch die Auswertung des elektrischen Signals kann der Schließzeitpunkt besonders einfach und genau ermittelt werden.

Eine Ausgestaltung der Erfindung sieht vor, dass dann, wenn festgestellt wird, dass eine Verkokung vorliegt, ein entsprechender Eintrag in einen von einem Diagnosegerät lesbaren Speicher erfolgt. Dadurch kann die Diagnose der Brennkraftmaschine vorteilhaft verbessert werden.

Vorzugsweise wird das erfindungsgemäße Verfahren mittels eines Computerprogramms durchgeführt, welches entsprechend den jeweiligen Verfahrensschritten programmiert ist. Das Computerprogramm läuft beispielsweise auf einer Steuer- und/oder Regeleinrichtung ab, welche ein Kraftstoffsystem der Brennkraftmaschine steuert.

Nachfolgend werden beispielhafte Ausführungsformen der Erfindung unter Bezugnahme auf die Zeichnung erläutert. In der Zeichnung zeigen:
- Figur 1: ein vereinfachtes Schema einer Brennkraftmaschine;
- Figur 2: eine vereinfachte Schnittdarstellung eines Injektors;
- Figur 3: eine Kurvenschar mit Schließzeitpunkten über einer Ansteuerdauer;
- Figur 4: eine Kurvenschar mit Kraftstoff-Einspritzmengen über der Ansteuerdauer ; und
- Figur 5: ein Flussdiagramm zur Durchführung des Verfahrens.

Es werden für funktionsäquivalente Elemente und Größen in allen Figuren auch bei unterschiedlichen Ausführungsformen die gleichen Bezugszeichen verwendet.

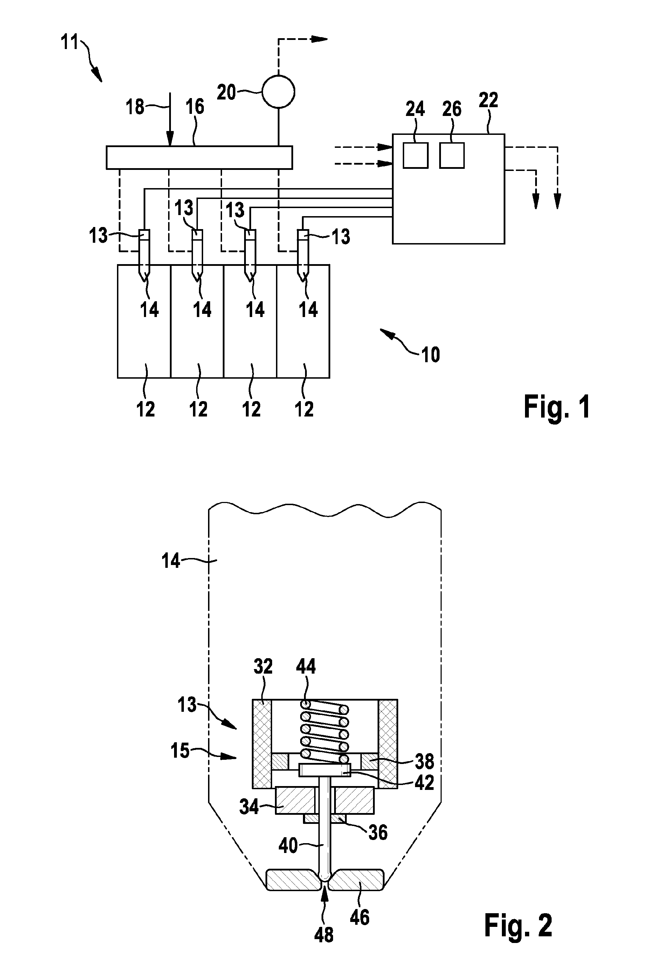

Die Figur 1 zeigt ein vereinfachtes Schema eines Kraftstoffsystems 11 einer Brennkraftmaschine 10 mit vorliegend vier Zylindern 12 und zugehörigen Injektoren 14 zur Einspritzung von Kraftstoff. Die Injektoren 14 können durch je eine elektrische Betätigungseinrichtung 13 betätigt werden. Oberhalb der Injektoren 14 ist ein Hochdruckspeicher 16 dargestellt, der aus einer Hochdruckleitung 18 mit Kraftstoff gespeist und von einem Drucksensor 20 überwacht wird. Die Brennkraftmaschine 10 ist entweder als ein Benzinmotor oder als ein Dieselmotor ausgeführt. Im rechten oberen Teil der Figur 1 ist eine Steuer- und/oder Regeleinrichtung 22 zusammen mit angedeuteten abgehenden und ankommenden Steuerleitungen dargestellt, sowie ein darin enthaltener elektrischer Speicher 24 und ein Computerprogramm 26.

Im Betrieb speist eine (nicht dargestellte) Kraftstoffpumpe den Hochdruckspeicher 16 über die Hochdruckleitung 18, wobei der Drucksensor 20 den aktuellen Kraftstoffdruck über eine angedeutete Signalleitung zur Steuer-und/oder Regeleinrichtung 22 meldet. Die vier Injektoren 14 setzen abhängig von einem Ansteuersignal der elektrischen Betätigungseinrichtung 13 eine bestimmte Kraftstoffmenge in die Zylinder 12 ab.

Figur 2 zeigt schematisch einige Elemente eines Injektors 14 zur Kraftstoff-Direkteinspritzung einer Brennkraftmaschine 10. In Figur 2 ist der Injektor 14 geschlossen gezeigt. Dargestellt ist unter anderem die elektrische Betätigungseinrichtung 13, welche vorliegend ein Elektromagnet ist. Die elektrische Betätigungseinrichtung 13 umfasst eine Ankerwicklung 32 und einen Anker 34, der bei einer Bestromung in die Ankerwicklung 32 gezogen wird. Die Bewegung des Ankers 34 ist durch einen Ruhesitz 36 sowie einen Ankeranschlag 38 begrenzt. Bei geschlossenem Injektor 14 liegt der Anker 34 auf dem Ruhesitz 36 auf. Durch eine axiale Bohrung im Anker 34 ist eine Ventilnadel 40 geführt, welche an ihrem in der Zeichnung oberen Ende fest mit einem scheibenförmigen Teller 42 verbunden ist. Auf den Teller 42 wirkt eine Schraubenfeder 44 ein und beaufschlagt die Ventilnadel 40 somit in Schließrichtung. Die Ventilnadel 40 und der Teller 42 bilden zusammen ein Ventilelement 15.

Am in der Zeichnung unteren Ende des Injektors 14 ist ein Ventilsitz 46 angeordnet. Eine Auslassöffnung 48 ist bei auf dem Ventilsitz 46 aufliegender Ventilnadel 40 verschlossen und bei abgehobener Ventilnadel 40 geöffnet (nicht dargestellt). Sonstige Elemente des Injektors 14, wie zum Beispiel Kraftstoffkanäle, sind nicht mit dargestellt. Alle Bewegungen geschehen in einer auf die Figur 2 bezogenen vertikalen Richtung.

Es versteht sich, dass der Injektor 14 beispielsweise auch als so genanntes Servoventil ausgeführt sein kann, und das erfindungsgemäße Verfahren damit durchgeführt werden kann. Dies ist in der Figur 2 jedoch nicht gezeigt. Die Betätigungseinrichtung kann ferner ein piezoelektrisches Element sein, was ebenfalls in Figur 2 nicht dargestellt ist.

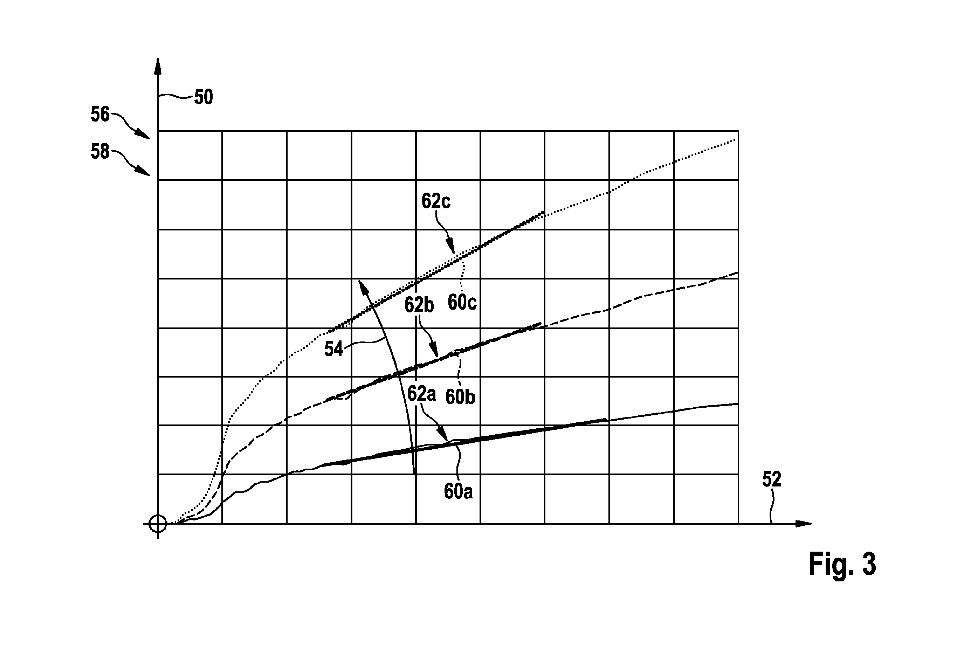

Figur 3 zeigt eine erste Kurvenschar von Kurven, welche einen Differenzwert 50 in Abhängigkeit einer Ansteuerdauer 52 beschreiben. Der Parameter der drei in der Zeichnung dargestellten Kurven ist das jeweilige Maß 54 einer Verkokung (Verkokungsgrad) des Injektors 14. Die Verkokung bedeutet Ablagerungen in einem Bereich einer Injektordüse bzw. der Auslassöffnung 48 des Injektors 14, welche insbesondere durch ungeeignete Kraftstoffe und/oder hohe Temperaturen entstehen bzw. gefördert werden. Beispielsweise kann die Verkokung eine Verminderung des hydraulischen Durchflusses durch die Injektordüse bewirken.

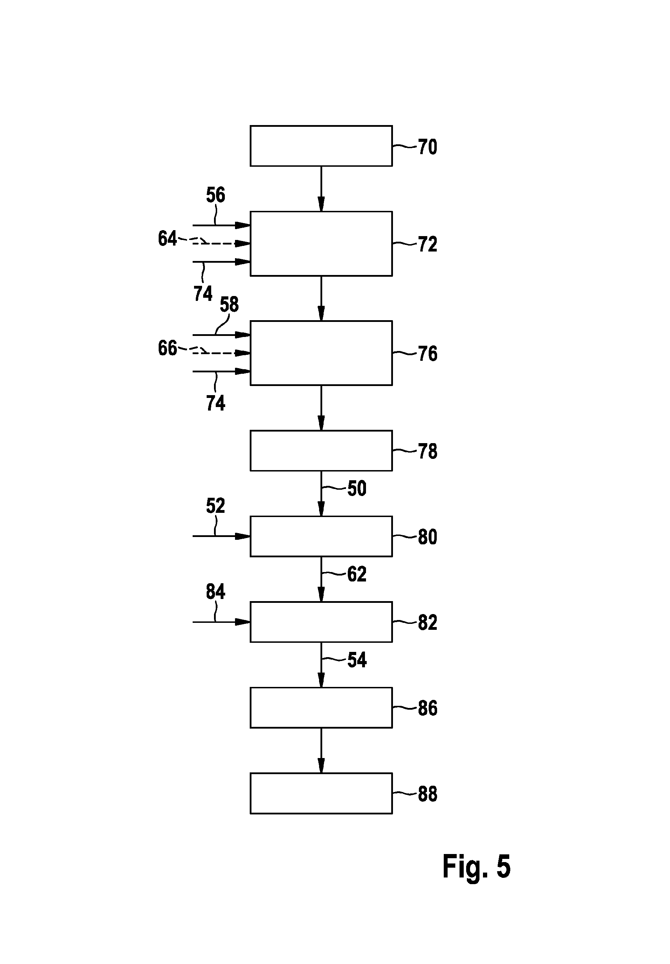

Die Differenzwerte 50 der Figur 3 sind gebildet durch eine Differenz zwischen aktuellen Schließzeitpunkten 56 (siehe Figur 5) und Referenz-Schließzeitpunkten 58 (siehe Figur 5). Der das Maß 54 beschreibende Pfeil weist in der Zeichnung in Richtung höherer Verkokungsgrade. Ein Verkokungsgrad von null entspricht der Abszisse des dargestellten Koordinatensystems, da hierbei die Differenz zwischen den aktuellen Schließzeitpunkten 56 und den Referenz-Schließzeitpunkten 58 für sämtliche Ansteuerdauern 52 null ist, und somit die Differenzwerte 50 ebenfalls null sind.

Man erkennt, dass in einem mittleren Bereich der Zeichnung für jede der drei dargestellten Kurven eine Gerade 60 - vorliegend als Geraden 60a, 60b und 60c bezeichnet - angegeben werden kann, für welche die jeweilige Kurve abschnittsweise in etwa geradenartig ausgebildet ist. Weiterhin ist zu erkennen, dass mit zunehmender Ansteuerdauer 52 der Differenzwert 50 in Abhängigkeit von dem Maß 54 zunimmt. Entsprechend nehmen auch zugehörige Steigungen 62a, 62b und 62c zu. Daraus ergibt sich, dass die Steigungen 62a, 62b und 62c geeignet sind, das Maß 54 der Verkokung anzugeben.

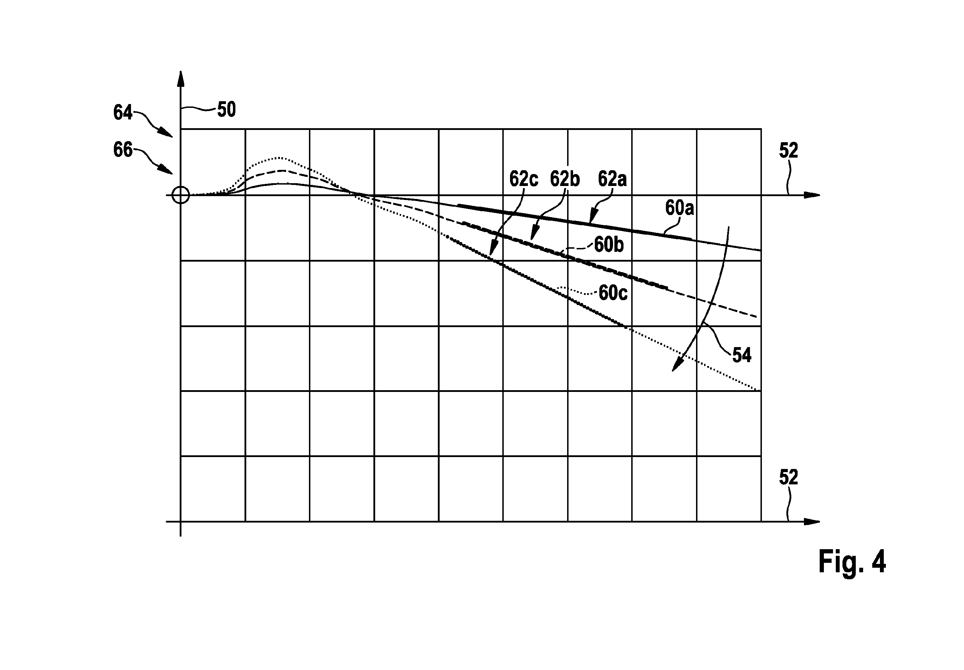

Figur 4 zeigt eine zweite Kurvenschar von Kurven, welche den Differenzwert 50 in Abhängigkeit von der Ansteuerdauer 52 beschreiben. Wie in der Figur 3 ist der Parameter der Kurvenschar das Maß 54 der Verkokung. Im Unterschied zu der Figur 3 ist die Abszisse im oberen Bereich des Koordinatensystems angeordnet, und das Maß 54 der Verkokung wird in der Zeichnung nach unten hin größer. Die Differenzwerte 50 der Figur 4 sind gebildet durch eine Differenz zwischen aktuellen Einspritzmengen 64 (siehe Figur 5) und Referenz-Einspritzmengen 66 (siehe Figur 5). Mit zunehmendem Verkokungsgrad nimmt die jeweils eingespritzte Kraftstoffmenge ab.

Ebenso wie bei Figur 3 kann in der Figur 4 für jede der drei dargestellten Kurven eine Gerade 60 - ebenfalls als Geraden 60a, 60b und 60c bezeichnet - angegeben werden, für welche die jeweilige Kurve abschnittsweise in etwa geradenartig ausgebildet ist. Man erkennt, dass mit zunehmendem Maß 54 der Verkokung die Steigung 62 kleiner wird (bzw. der Betrag der Steigung 62 wird größer). Entsprechend charakterisieren die Steigungen 62a bis 62c (bzw. deren Beträge) das jeweilige Maß 54 der Verkokung.

Figur 5 zeigt ein einfaches Flussdiagramm zum Ablauf des Computerprogramms 26 auf der Steuer- und/oder Regeleinrichtung 22 der Brennkraftmaschine 10. Die Abarbeitung des Flussdiagramms erfolgt in der Zeichnung im Wesentlichen von oben nach unten.

Ausgehend von einem Startblock 70 werden in einem Block 72 mindestens zwei aktuelle Schließzeitpunkte 56 bzw. aktuelle Einspritzmengen 64 des Injektors 14 bei unterschiedlichen Ansteuerdauern 52 ermittelt. Ein aktuell vorliegender Kraftstoffdruck 74 wird ebenfalls erfasst. Vorzugsweise werden in dem Block 72 jedoch mehr als zwei Ermittlungen mit entsprechend unterschiedlichen Ansteuerdauern 52 bei einem jeweils konstanten Kraftstoffdruck 74 durchgeführt.

In einem folgenden Block 76 werden zwei oder mehrere Referenz-Schließzeitpunkte 58 bzw. Referenz-Einspritzmengen 66 aus dem Speicher 24 der Steuer- und/oder Regeleinrichtung 22 ausgelesen. Die Referenz-Schließzeitpunkte 58 bzw. die Referenz-Einspritzmengen 66 wurden an einem nicht verkokten Referenz-Injektor 14 oder an einem neuwertigen Injektor 14 bei vergleichbaren Ansteuerdauern 52 und bei einem zu den aktuellen Ermittlungen vergleichbaren Kraftstoffdruck 74 ermittelt.

In einem folgenden Block 78 wird eine Differenz zwischen den jeweiligen aktuellen Schließzeitpunkten 56 und den jeweiligen Referenz-Schließzeitpunkten 58 bzw. den jeweiligen aktuellen Einspritzmengen 64 und den jeweiligen Referenz-Einspritzmengen 66 gebildet. Das Ergebnis sind jeweilige Differenzwerte 50.

In einem folgenden Block 80 werden die Differenzwerte 50 mit den zugehörigen Ansteuerdauern 52 in einen funktionalen Zusammenhang in Gestalt einer mathematischen Kurve gebracht. Danach wird die Steigung 62 der Kurve oder zumindest eines geradenartigen Kurvenabschnitts ermittelt.

In einem folgenden Block 82 wird die ermittelte Steigung 62 mit einem aus dem Speicher 24 ausgelesenen Vergleichswert 84 verglichen. Der Vergleichswert 84 ist parametriert mit dem Kraftstoffdruck 74 sowie dem Maß 54 der Verkokung. Daraus kann das Maß 54 als Zahlenwert, beispielsweise als Prozentwert, ermittelt werden.

In einem folgenden Block 86 werden Schritte durchgeführt, mittels derer eine Ist-Einspritzmenge des Kraftstoffs, das heißt, die vorliegende aktuelle Einspritzmenge 64, in Bezug auf eine Soll-Einspritzmenge korrigiert wird. Somit wird der Einfluss der Verkokung kompensiert. Bei einem einen Schwellwert überschreitenden Maß 54 der Verkokung wird zugleich ein entsprechender Eintrag in einen von einem Diagnosegerät lesbaren Speicher vorgenommen.

In einem folgenden Endeblock 88 endet die in der Figur 5 dargestellte Prozedur. Die Abarbeitung kann an ein Hauptprogramm zurückgegeben werden oder alternativ kann die in der Figur 5 beschriebene Prozedur wiederholt werden.

## Patentansprüche

1. Verfahren zum Betreiben einer Brennkraftmaschine (10), bei dem Kraftstoff mittels eines Injektors (14) in einen Brennraum der Brennkraftmaschine (10) eingespritzt wird, **dadurch gekennzeichnet, dass** eine Größe, welche eine Steigung (62) einer Geraden (60) oder einer mindestens abschnittsweise geradenartigen Kurve charakterisiert, ermittelt wird, wobei die Gerade (60) oder geradenartige Kurve Ansteuerdauern (52) des Injektors (14) mit jeweils zugehörigen Differenzwerten (50) verknüpft, und wobei ein Differenzwert (50) durch die Differenz zwischen einem aktuellen Schließzeitpunkt (56) und einem Referenz-Schließzeitpunkt (58) oder zwischen einer aktuellen Einspritzmenge (64) und einer Referenz-Einspritzmenge (66) gebildet wird, und dass aus der ermittelten Größe ein Maß (54) für eine Verkokung des Injektors (14) ermittelt wird.

2. Verfahren nach Anspruch 1, **dadurch gekennzeichnet, dass** der Referenz-Schließzeitpunkt (58) oder die Referenz-Einspritzmenge (66) an einem nicht verkokten Referenz-Injektor (14) ermittelt und in einem Speicher (24) abgelegt wurden.

3. Verfahren nach einem der vorhergehenden Ansprüche, **dadurch gekennzeichnet, dass** es bei einem konstanten Kraftstoffdruck (74) durchgeführt wird.

4. Verfahren nach einem der vorhergehenden Ansprüche, **dadurch gekennzeichnet, dass** eine Größe, welche einer größeren Steigung (62) entspricht, als Anzeichen für eine stärkere Verkokung gewertet wird als eine Größe, welche einer kleineren Steigung (62) entspricht.

5. Verfahren nach wenigstens einem der vorhergehenden Ansprüche, **dadurch gekennzeichnet, dass** die Ansteuerung des Injektors (14) in Abhängigkeit von der ermittelten Verkokung derart geändert wird, dass eine Ist-Einspritzmenge (64) des Kraftstoffs in Bezug auf eine Soll-Einspritzmenge korrigiert wird.

6. Verfahren nach wenigstens einem der vorhergehenden Ansprüche, **dadurch gekennzeichnet, dass** der Schließzeitpunkt (56, 58) ermittelt wird, indem ein Anschlagen eines Ventilelements (15) an einem Ventilsitz (46) des Injektors (14) mittels einer Auswertung eines an einer elektrischen Betätigungseinrichtung (13) des Injektors (14) anliegenden elektrischen Signals ermittelt wird.

7. Verfahren nach einem der vorhergehenden Ansprüche, **dadurch gekennzeichnet, dass** dann, wenn festgestellt wird, dass eine Verkokung vorliegt, ein entsprechender Eintrag in einen von einem Diagnosegerät lesbaren Speicher erfolgt.

8. Computerprogramm (26), **dadurch gekennzeichnet, dass** es zur Anwendung in einem Verfahren nach einem der vorhergehenden Ansprüche programmiert ist.

9. Steuer- und/oder Regeleinrichtung (22) für eine Brennkraftmaschine (10), **dadurch gekennzeichnet, dass** auf ihr ein Computerprogramm (26) nach Anspruch 8 ablauffähig ist.
